# EUROPEAN PATENT APPLICATION

(11) **EP 2 028 885 A1**
(43) Date of publication of application: **25.02.2009**
(21) Application number: 07014767.3
(22) Date of filing: 27.07.2007
(51) Int. Cl.: H04W 4/00

(54) **System and method for generating presence information with regard to people visiting an area of interest**

(71) Applicant: Koninklijke KPN N.V., 2516 CK The Hague (NL)
(72) Inventor: Rutten, Joost, 2694 CA 's.Gravenzande (NL); Verhoef, Dirk Antonie, 2231 HS Rynsburg (NL)
(74) Representative: Wuyts, Koenraad Maria

(57) **Abstract**

The invention relates to an information system for generating presence information with regard to people visiting an area of interest. The system comprises a detection system arranged to detect locations of a plurality of mobile terminals, an identification system arranged to identify subscribers of said plurality of mobile terminals, a subscriber information system arranged to provide subscriber related information with regard to said subscribers, and a processing module arranged to create said presence information for said area of interest using said location information of said subscribers and said subscriber related information.

## Description

### Technical field

The present invention relates to an information system and method for generating presence information with regard to people visiting an area of interest.

### Background

In order to obtain useful marketing information, a marketer nowadays may gather such information by asking for example visitors of a shopping mall to fill in a question form. Alternatively, question forms can be distributed by a postal delivery service or by email to the presumably relevant people.

In all the above mentioned methods, the marketer is very dependent on the willingness of the interrogated people to actually fill in the form and send it back. Even if the marketer rewards people that have sent back the form, the amount of returned forms is often disappointing. Furthermore, the quality and thus reliability of the answers given is questionable.

### Summary of the invention

A goal of the present invention is to provide a system for precise and reliable information with regard to people visiting a particular area of interest.

This goal is achieved by providing an information system for generating presence information with regard to people visiting an area of interest comprising:
- a detection system arranged to detect locations of a plurality of mobile terminals;
- an identification system arranged to identify subscribers of said plurality of mobile terminals;
- a subscriber information system arranged to provide subscriber related information with regard to said subscribers;
- a processing module arranged to create said presence information for said area of interest using said location information of said subscribers and said subscriber related information.
In a further aspect, the invention relates to a method

### Brief description of the drawings

The present invention will be discussed in more detail below, using a number of exemplary embodiments, with reference to the attached drawings, in which:
Fig. 1 shows an information system for generating presence information according to an embodiment of the invention;
Fig. 2 shows an example of the information system integrated in a GSM network with a HLR;
Fig. 3 schematically shows part of a telecommunication network with a network probe;
Fig. 4 shows a map with two regular cells formed by two BTS's and a dedicated BTS positioned so as to cover an area of interest;
Fig. 5 shows a simplified form of a structure of a processing module according to an embodiment.

### Detailed description of the invention

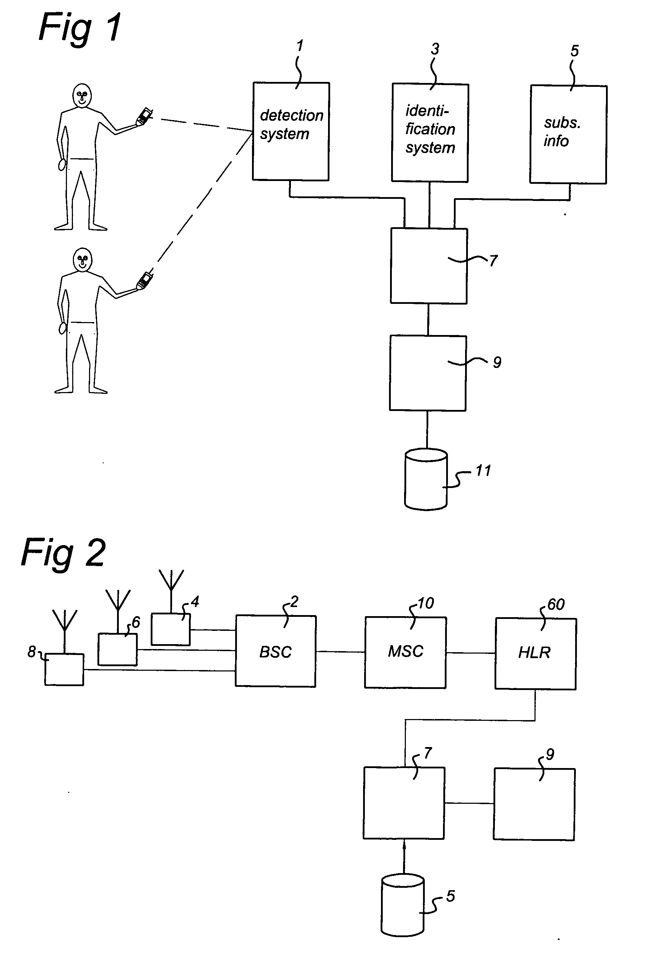

**Figure 1** shows an embodiment of the invention in which the information system for generating presence information comprises a detection system 1 arranged to detect locations of a plurality of mobile terminals. The mobile terminals may be mobile phones, but they may also be any other type of terminal used for mobile communication. The information system also comprises an identification system 3 arranged to identify subscribers of the mobile terminals. A subscriber information system 5 is comprised which is arranged to provide subscriber related information with regard to the subscribers. A processing module 7 receives input from the detection system 1, the identification system 3 and from the subscriber information system 5. The processing module 7 is arranged to create output data using location information of the subscribers and the subscriber related information. The detection system 1 may comprise a database for storing a location of the subscribers as a function of time. This so-called presence information is used to track the subscribers. When combined with subscriber related data of the people, it can be used to produce useful marketing info which can be stored in a database, such as the database 11 of Figure 1.

An advantage of the information system described above is that there is no need for obtrusive questionnaires in order to get marketing information. Furthermore, the information system will provide reliable information on time and place of people visiting an area of interest. It should be noted that instead of being separate systems, the modules 1, 3, 5, 7, 9 and 11 can be integrated into one or more integrated systems.

An example of the subscriber information system 5 is a customer database of a service provider. The customer database may store for each subscriber a record with customer data such as a name, an address, a data of birth, an MSISDN number and a gender. By combining the location information of mobile terminals with the customer data, marketing information can be extracted which can be input to a marketing application. The processing module 7 can be arranged to determine the number of registered mobile terminals in an area at a certain point in time. By keeping track of the number of registered mobile terminals in an area of interest, an estimation can be made for the actual number of visitors. A provider of a telecom service can simply incorporate its market share of the mobile phone market in the calculations and end up with a rough estimation of the actual number of visitors.

The extracted marketing information can also be used for direct mailing purposes. Since the time and place of a subscriber are known, a marketer may used the marketing info for advertising.

In an embodiment, the information system further comprises a second processing module 9, see Figure 1, which is arranged to aggregate information about specific groups of subscribers. By using data from the customer database system, the number of people belonging to a specific target group can be estimated, which can be used by a marketing application. An example of such a marketing application is a market research on which type of customers visit a certain shopping mall. This may be calculated for specific days, times or during special events, such as sales. A possible outcome of such a research may be that sales on Friday evenings only attract people living within an area of 50 kilometres away from the shopping mall.

According to an embodiment, the detection system 1 comprises a location server 60 of a mobile communication network. The mobile communication network can be that of any of the wireless communication technologies like GSM, UMTS, GPRS, CDMA, WLL , WAN, WiFi, WiMAX etcetera. The location server gives location info of the subscribers. The advantage of this embodiment is that an already existing network (i.e. a mobile telecommunication network) can be used.

Normally a location server, such as a Home Location Register (HLR/VLR), does not contain customer related information such as name and address. So, a separate subscriber information system is still needed. This embodiment is discussed with reference to **Figure 2** in which an example of a GSM network is given with a VLR/HLR 60. The VLR/HLR 60 is arranged to register the location information of all mobile terminals present in the network as will be known to the skilled person. In this embodiment, the processing module 7 receives information from the VLR/HLR 60. In Figure 2, the customer database system 5 is also shown which stores the data of the subscribers as described above. It is noted that the customer database system 5 might contain the VLR/HLR 60 as well. In that case no separate VLR/HLR is present in the network of Figure 2.

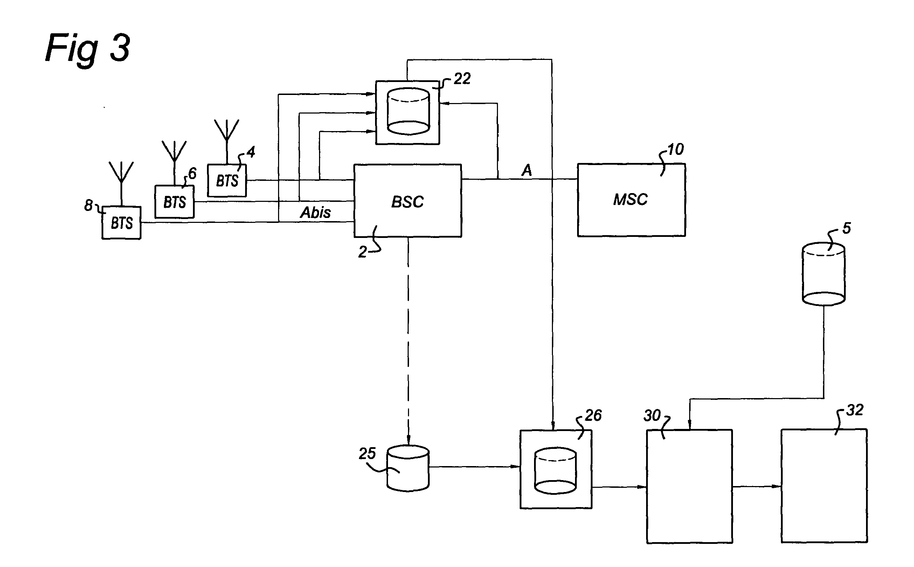

**Figure 3** depicts an example of relevant parts of a mobile communication network and of the information system according to an embodiment of the invention. The mobile communication network comprises a Base Station Controller (BSC) 2, a number of BTS's 4, 6, 8 and a Mobile Switching Center (MSC) 10. Please note that a Base Transceiver Station (BTS) is sometimes referred to as RBS (Radio Base Station), Node B (in 3G Networks) or simply BS (Base Station). A BTS forms part of a Base Station Subsystem (BSS) and has the equipments (transceivers) for transmitting and receiving of radio signals, signal processors, signal paths, signal amplifiers, and equipments for system management. Typically a BTS will have several transceivers (TRXs) which allow it to serve several different frequencies and different sectors of a cell. In the case of sectorised base stations, a cell is subdivided to a number of areas, every one of which is illuminated from an antenna directive (or panel). One antenna that does not illuminate in all the directions, but concentrates the flow of power within a particular area of the cell, known as 'sector'. A typical structure is the so-called trisector in which there are 3 sectors, each one served by separate antennas. Every sector has separate direction of tracking of 120° with respect to the adjacent ones. If not sectorised, the cell will be served by a unidirectional antenna, which radiates in all directions. Bisectored cells are also implemented with the antennas serving sectors of 180° separation to one another.

Figure 3 further shows a network probe 22 that is arranged to tap communication from and to the BSC 2 as will be known to the skilled person. In this example, the network probe 22 sends the tapped data to a central data collection system 26. Figure 3 also shows a customer database system 5 which stores customer data such as name, address and age of the customers of the GSM network. The customer database 5 may be managed by one or more telecom providers. The information system further comprises a processing module 30 arranged to convert network data and customer data into output data that can be used for marketing purposes.

In an embodiment, the central data collection system 26 shown in Figure 3 is arranged to register real time location information of all mobile terminals of a particular provider. The only condition needed is that the mobile terminals need to be switched on. Up-to-date cell information can be gathered by the network probe and the central data collection system 26. According to an embodiment, Location Area Updates (LAUs) for each active mobile terminal (i.e. not switched off) with cell information are registered real time. Next, the cell information is translated into actual location information such as, the identification of a city or the geographic location of an area of interest. For the translation of the cell information into real location information a database 25 may be used comprising relation between the cell ID's (which are part of the LAU's) and the geographical location of the cells. Once the real location information is available, it will be input for the processing module 30, see Figure 3. The database 25 comprises radio network data, wherein the correlation between cell ID and geographic location of the cells is represented. The database 25 may be derived from planning tools. Information in the database 25 is used by data collection system 26, which contains the translation function.

The BSC 2 controls the BTS's 4, 6, 8. As long as a mobile terminal (not shown) camps on one particular BTS 4, 6, 8 connected to the BSC 2, the LAC of the mobile terminal stored in the MSC 10, will remain unchanged. Even when the mobile terminal moves to another cell, then the change in cell will not be reported to the MSC 10. The reason for this is to avoid a huge amount of data traffic across the telecommunication network. The network probe 22 therefore is unable to directly tap a cell change of the mobile terminal when in idle mode. It will have to wait for a following periodically occuring LAU.

As was already stated above, the location information of the mobile terminals is updated towards the MSC 10 at the occurrence of a LAU. The network probe 22 is arranged to monitor the position updates and send them to the central data collection system 26. The network probe 22 may comprise a database for locally storing positioning information of mobile callers using the associated BTS's. Positioning information of a mobile terminals may comprise a Location area code (LAC) allocated for each BSC. A LAC is representing a predetermined set of cells, which could be (by coincidence) a BSC. (Even at BTS level, a LAC is not restricted to one physical BTS, so cells of one BTS can contain several cells with different LACs. However, this is not a common situation). A LAC update (LAU) for a specific mobile terminal occurs in the following events:
- if the mobile terminal is used for a call (Mobile originated as well as Mobile Terminated);
- periodically (for example every 4 hours), the network operator may determine whether to use these periodic updates. The network operator may determine the interval as well. The settings made in the network will then be broadcasted to the mobile terminals, which actually trigger the periodic LAU's. The mobile terminals will only trigger a LAU at a specific frequency (e.g. every 4 hours) when in idle mode (and not crossing a location area border);
- due to the crossing of a LAC border (i.e. the border between two area's with different LAC).

A cell associated with one BTS will commonly have a diameter varying between 300 m and 4 km. If an area of interest, such as a shopping mall, is covered by a cell that is much larger than the area of interest, no reliable information can be obtained. Therefore, according to a particular embodiment, a dedicated BTS is added to the telecommunication network and connected to the BSC 2. The dedicated BTS will transmit a unique LAC so as to define its own 'location area' which has the size of a cell or a sector of a cell. By adjusting the transmission power and/or antenna setup, the dedicated BTS is able to create a relative small cell (and thus location area). Mobile stations entering the cell will be triggered to submit their location to the MSC via the dedicated BTS. These location updates will be registered and used for up-to-date and detailed location information. Cells can be adjusted in this way to an accuracy of less then 10 metres, depending on environment. So even very small pots can be used (for instance a shop within the shopping mall, or differentiate several entrances of the mall).

In an embodiment, the dedicated BTS is arranged for signalling purposes only and does not carry traffic. In this embodiment, the mobile terminals located in the corresponding cell are not allowed to set up a communication. In this case only a LAU is forwarded. The rejections by the dedicated BTS will cause the calling mobile terminal to look for another BTS able to carry traffic as well as signalling. If a mobile terminal enters the coverage area of the dedicated BTS, the mobile terminal will do an LAU attempt. This attempt will be registered by the probe system. However, the mobile terminal get in return a 'LA not allowed message' from the network. The terminal searches then immediately for another cell. If this cell is found, the terminal will register via a LA/RA on this cell and after positive acknowledgement the terminal will camp on this cell. A call will be made then according to normal procedures as will be known to the skilled person. It is noted that the LAC updates may also be registered in a VLR/HLR of the network.

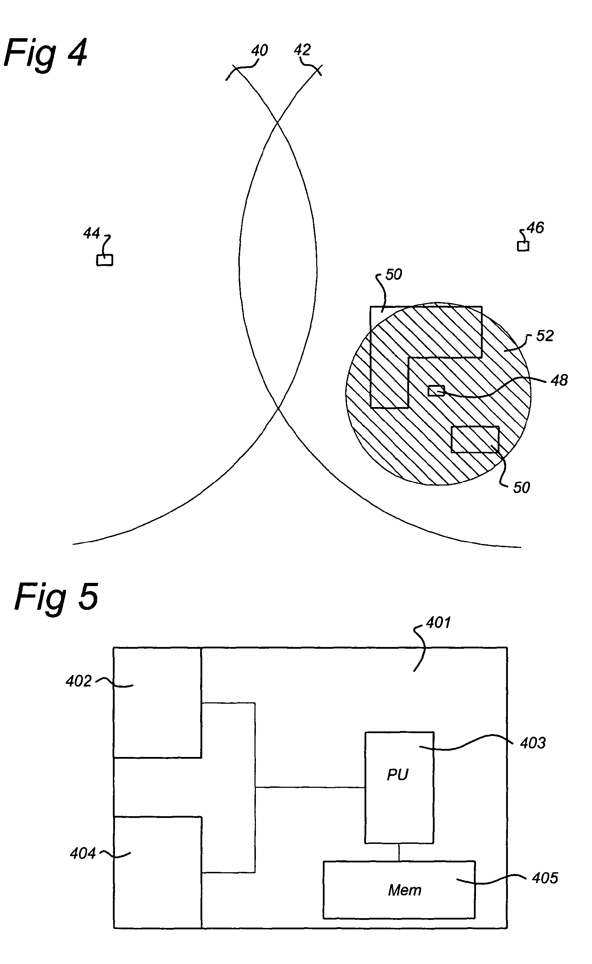

**Figure 4** shows an example of a map with two regular cells 40, 42 formed by two BTS 44, 46 respectively. A dedicated BTS 48 is positioned so as to (at least partly) cover an area of interest. The area of interest may for example be a shopping mall 50. Figure 4 shows a cell 52 created by the dedicated BTS 48. The cell 52 is smaller than the regular cells 40, 42 but it should be noted that for other applications this might not be the case. The cell 52 covers the shopping mall 50 which in this example constitutes of two separate buildings. A unique location area code is assigned to the dedicated BTS 48 which is broadcasted to mobile stations in the corresponding cell 52. This will result in the sending of a LAU by each mobile terminal entering the cell 52. The LAU will be communicated to the BSC 2 and will be tapped by the network probe 22 and send to the central data collection system 26, see Figure 3.

Instead of adding a dedicated BTS 48, one or more of the regular BTS 44, 46 may be used as a dedicated BTS. This can be achieved by letting the regular BTS 44, 46 broadcast a unique LAC different from the LAC associated with the BSC 2. If for example the regular BTS 4 of Figure 3 is made a dedicated BTS having a unique LAC associated with it, all mobile terminals entering the cell of the BTS 4 will create a LAU message which will be received by the BTS 4 and forwarded to the BSC 2. At the same time, the BTS 4 might still function as a regular BTS and will carry traffic next to signalling.

An additional dedicated base station is favourable in case one would like to have very accurate location information. Imagine the shopping mall case, without an additional dedicated BTS, it is simply not possible to detect the users. But imagine for instance a larger area, then in a lot of cases, simply the use of the existing BTS's is sufficient. Such a dedicated base station could also be installed temporarily at a specific area of interest, during special events or during a marketing research period.

The processing modules 7, 9, the MSC 10, the BSC 2 and the HLR 60 may be implemented as network units 401, the structure of which is shown in simplified form in **Figure 5**. The network unit 401 comprises a processing unit 403 connected to an input unit 402. Furthermore, the processing unit 403 is connected to an output unit 404. These allow the processing unit 403 to communicate with other network units 403 or other elements in the communication network. The processing unit 403 may comprise a general purpose central processing unit (CPU) or a group of interconnected CPU's, or alternatively a dedicated processing unit, e.g. a signal processing unit. A memory module 405 may also be provided and may be used to store data, but may also be used to store a software program comprising instructions, which allows to use the processing unit 403 for various processing functions.

The present invention has been explained above with reference to a number of exemplary embodiments. As will be apparent to the person skilled in the art, various modifications and amendments can be made without departing from the scope of the present invention, as defined in the appended claims. For example, instead of using Circuit Switched terminals, packet switched networks and terminals, such as GPRS networks and terminals may be used to produce the location information. In that case so-called Routing Area Updates (RAU) are used to get location information.

## Claims

1. Information system for generating presence information with regard to people visiting an area of interest, said system comprising:
- a detection system arranged to detect locations of a plurality of mobile terminals;
- an identification system arranged to identify subscribers of said plurality of mobile terminals;
- a subscriber information system arranged to provide subscriber related information with regard to said subscribers;
- a processing module arranged to create said presence information for said area of interest using said location information of said subscribers and said subscriber related information.

2. Information system for generating presence information according to claim 1, said information system further comprising a further processing module (32) arranged to aggregate information about specific groups of subscribers.

3. Information system for generating presence information according to claim 1 or 2, wherein said detection system comprises a location server (60) of a mobile communication network.

4. Information system for generating presence information according to any of the preceding claims, wherein said detection system comprises a network probe arranged to tap location area updates from a communication line between a base station controller and a switching node (10) or between said base station controller and a base stations of a mobile communication network.

5. Information system for generating presence information according to claim 1, wherein said detection system comprises a dedicated base station (4; 48) arranged to broadcast a unique Location area code (LAC) to mobile terminals.

6. Information system for generating presence information according to claim 5, wherein said dedicated base station is arranged to carry signalling but not traffic.

7. Method of generating presence information with regard to people visiting an area of interest, said method comprising:
- detecting locations of a plurality of mobile terminals;
- identifying subscribers of said plurality of mobile terminals;
- providing subscriber related information with regard to said subscribers;
- creating output data using said location information of said subscribers and said subscriber related information.
